Europäisches Patentamt

European Patent Office

Office européen des brevets

(19)

(11) Veröffentlichungsnummer: **0 005 431**
**A2**

(12) **EUROPÄISCHE PATENTANMELDUNG**

(21) Anmeldenummer: **79100255.3**

(22) Anmeldetag: **29.01.79**

(51) Int. Cl.²: **F 01 D 1/34**

(30) Priorität: **16.05.78 DE 2821233**

(43) Veröffentlichungstag der Anmeldung:
**28.11.79 Patentblatt 79/24**

(84) Benannte Vertragsstaaten:
**BE CH FR GB IT LU NL SE**

(71) Anmelder: **Bachl, Herbert, Prof. Dr.**
**StolzingstraBe 4**
**D-8000 München 81(DE)**

(72) Erfinder: **Bachl, Herbert, Prof. Dr.**
**StolzingstraBe 4**
**D-8000 München 81(DE)**

(74) Vertreter: **Patentanwälte Dipl.-Ing. A. Grünecker,**
**Dr.-Ing. H. Kinkeldey, Dr.-Ing. W. Stockmair,**
**Dr. rer. nat. K. Schumann, Dipl.-Ing. P. Jakob, Dr. rer. nat.**
**G. Bezold Maximilianstrasse 43**
**D-8000 München 22(DE)**

(54) **Strömungsmaschine.**

(57) Bei einer Strömungsmaschine ist wenigstens ein scheibenförmiges Laufrad vorgesehen, das Strömungskanäle für ein Strömungsmittel aufweist, deren Eintritts- und Austrittsöffnungen jeweils stirnseitig am Laufrad angeordnet sind. Dabei besitzen die Eintrittsöffnungen einen anderen Abstand von der Drehachse, als die Austrittsöffnungen. Jeder Strömungskanal besitzt ein radial ferneres und ein radial näheres Umlenkknie mit jeweils zwei Schenkeln, wobei die Schenkel miteinander einen 90 Grad Winkel bilden und jeweils ein Schenkel des einen Knies zu einer Eintrittsöffnung hinführt, während ein Schenkel des anderen Knies zu einer Austrittsöffnung hinleitet. Die jeweils anderen Schenkel der beiden Knie sind auf einen in etwa radialen Verbindungsabschnitt hingerichtet, der die beiden Umlenkknie miteinander verbindet.

Um Bei der Strömungsmaschine ein höheres Stufengefälle zu erreichen, ist vorgesehen, daß sowohl die Eintrittsals auch die Austrittsöffnungen sich auf der gleichen Stirnseite des Laufrades befinden.

Fig. 1

PATENTANWÄLTE

A. GRÜNECKER
DIPL.-ING

H. KINKELDEY
DR.-ING

W. STOCKMAIR
DR.-ING · AeE (CALTECH)

K. SCHUMANN
DR RER NAT DIPL-PHYS

P. H. JAKOB
DIPL-ING

G. BEZOLD
DR RER NAT · DIPL-CHEM

8 MÜNCHEN 22
MAXIMILIANSTRASSE 43

Bachl Herbert Professor Dr.
Stolzingstraße 4
8000 München 81

PA 13427
EP 52

## Strömungsmaschine

Die Erfindung bezieht sich auf eine Strömungsmaschine mit einem, im wesentlichen scheibenförmigen Laufrad, das Strömungskanäle für ein Strömungsmittel aufweist, deren Eintritts- und Austrittsöffnungen stirnseitig am Laufrad angeordnet sind, wobei alle Eintrittsöffnungen einen vorbestimmten Abstand zur Drehachse aufweisen, der verschieden ist vom entsprechenden Abstand der Austrittsöffnungen von der Drehachse und jeder Strömungskanal jeweils ein radial ferneres und ein radial näheres Umlenkknie mit zwei Schenkeln aufweist, die jeweils miteinander etwa einen 90 Grad Winkel

bilden, wobei ein Schenkel des einen Knies zu der Eintrittsöffnung hinführt und in Richtung der Relativgeschwindigkeit der dort vorhandenen Eintrittsöffnung des Strömungsmittels verläuft und ein Schenkel des anderen Knies zu der Austrittsöffnung hinleitet und in Richtung der Relativgeschwindigkeit der Austrittsströmung verläuft, während der jeweilige andere Schenkel zu einem gemeinsamen, in etwa radialen Verbindungsabschnitt hingerichtet ist, der die beiden Umlenkknie miteinander verbindet.

Aus der amerikanischen Patentschrift 4 029 431 (DE-OS 24 40 475) ist eine Strömungsmaschine der eingangs genannten Art bekannt, in der die Knie der Strömungskanäle so gerichtet sind, daß die Axialkomponenten der Relativgeschwindigkeit an den Eintritts- und Austrittsöffnungen in der gleichen Richtung verlaufen, während die Tangentialkomponenten einander entgegengerichtet sind. Dabei befinden sich die Eintrittsöffnungen auf der einen Stirnseite, während die Austrittsöffnungen an der anderen Stirnseite angeordnet sind.

Diese bekannte Strömungsmaschine ist als Kraft- und Arbeitsmaschine besonders dann geeignet, wenn eine Auslegung für kleine Schnelläufigkeit, d.h. bezogen auf das Stufengefälle kleine Volumendurchsätze erforderlich ist. Bei hoher tangentialer Umlenkung der Strömung im Laufrad ergeben sich nämlich kleine Relativgeschwindigkeiten, die einen verlustarmen Durchsatz auch kleinerer Volumenströme ermöglichen, gleichzeitig aber auch relativ hohe Stufengefälle bei Wahl ausreichend hoher Umfangs- und Absolutgeschwindigkeiten am Eintritts bzw. Austritt bedingen.

Die vorliegende Erfindung hat die Aufgabe, eine Strömungsmaschine der eingangs genannten Art so weiterzubilden, daß mit ihr ein noch höheres Stufengefälle erreicht werden kann.

Diese Aufgabe wird erfindungsgemäß dadurch gelöst, daß sowohl die Eintritts- als auch die Austrittsöffnungen sich auf der gleichen Stirnseite des Laufrades befinden.

Bei der Erfindung sind die Strömungskanäle so gelegt, daß ihre Eintrittsöffnungen sich auf der gleichen Stirnseite befinden, wie ihre Austrittsöffnungen. Mit dieser Gestaltung ist sowohl eine zentrifugale als auch eine zentripetale Durchströmung des Laufrades möglich. Gleichermaßen ist es denkbar, die Strömungskanäle so zu richten, daß entweder eine axiale Umlenkung eintritt oder auch nicht. Dies hängt ganz von dem Einsatzzweck und der gewünschten Durchströmung ab. Bedingt durch die stirnseitigen Eintritts- und Austrittsöffnungen findet in den Strömungskanälen in radialer Richtung eine Umlenkung von etwa 180 Grad statt. Hierdurch ist ein sehr hohes Stufengefälle bedingt.

Bei einer vorteilhaften Weiterbildung der Erfindung ist vorgesehen, daß das Laufrad wenigstens eine Gruppe von jeweils auf der einen Stirnseite mit Eintritts- und Austrittsöffnungen mündenden Strömungskanälen und wenigstens eine zweite Gruppe von jeweils auf der anderen Stirnseite jeweils mit Eintritts- und Austrittsöffnungen mündenden Strömungskanälen aufweist.

Bei dieser Gestaltung des Laufrades wird das Laufrad von zwei Gruppen von Strömungskanälen durchzogen, wobei jeweils die Eintritts- und Austrittsöffnungen der einen Gruppe auf der einen Stirnseite und die Öffnungen der anderen Gruppe auf der anderen Stirnseite münden. Dabei ist es möglich, daß die Strömungskanäle der einen Gruppe in zentrifugaler Richtung und die Strömungskanäle der anderen Gruppe in zentripetaler Richtung oder die Strömungskanäle der beiden Gruppen jeweils entweder beide in zentrifugaler Richtung oder beide in zentripetaler Richtung durchflossen werden.

Durch diese Gestaltung werden mehrere Vorteile erreicht. Sofern die eine Gruppe der Strömungskanäle zum Entspannen des Arbeitsmittels dient, während die andere zum Verdichten desselben herangezogen wird, wird das Laufrad durch das Zusammenfassen dieser beiden Gruppen von Strömungskanälen gut gekühlt, so daß hohe Turbineneintrittstemperaturen ohne Materialgefährdung möglich sind. Außerdem ist in dem Fall, wo die eine Gruppe von Strömungskanälen zum Verdichten und die andere Gruppe zum Entspannen des Arbeitsmittels herangezogen wird, der Vorteil gegeben, daß über die im Laufrad vorhandenen Trennwände der Strömungskanäle eine direkte Energieübertragung möglich ist. Die Welle braucht lediglich noch die Differenz zwischen der Energieerzeugung und der Verdichterarbeit abführen.

Eine derartige Gestaltung eignet sich für Antriebe aller Art die einen zeitlichen Gleichlauf von Verdichtern und Entspannern erfordern, z.B. als Turbolader, Gasturbinen für Fahrzeugantriebe und dergl.. Bei Anordnung von zwei Stufen auf einer Welle kann der Leitkanal zwischen einander gegenüberliegenden Laufradöffnungen besonders kurz und einfach gestaltet werden.

Eine andere günstige Weiterbildung der Erfindung besteht darin, daß eine Gruppe von Strömungskanälen vorhanden ist, deren Eintritts- bzw. Austritts-öffnungen sich an der Mantelfläche des Laufrades befinden, während deren Austritts- bzw. Eintrittsöffnungen an einer der beiden Stirnseiten angeordnet sind. Auf diese Weise ergibt sich eine zum Teil radiale Durchströmung des Laufrades mit einer Umlenkung von etwa 90 Grad im Bereich des Ein- oder Austritts an einer der beiden Stirnseiten des Laufrades.

Diese Ausführung kann von Vorteil sein, wenn im gleichen Laufrad drei Gruppen von Strömungskanälen untergebracht sind, in denen unterschiedliche Zustandsänderungen stattfinden, weil sich dann zwischen den Öffnungen auf den Stirnflächen und auf der Mantelfläche große Abstände zur Unterbringung von Dichtungen ergeben.

Im Hinblick auf die Abdichtung innerhalb der Strömungsmaschine ist es vorteilhaft, wenn am Laufrad in Bereichen zwischen mit unterschiedlichem Druck durchströmten Öffnungen Dichtungselemente angeordnet sind, die in axialer Richtung in das Laufrad hineinragen.

Da sich die Strömungswege von Labyrinthdichtungen vielfach in radialer und in axialer Richtung erstrecken, wird zur Unterbringung des für die Dichtungen erforderlichen Volumens an Platz im Leitkörper gespart und gleichzeitig die Masse des Laufrades verringert.

Nachfolgend sind Ausführungsbeispiele der Erfindung anhand einer Zeichnung dargestellt. Es zeigt:

Figur 1 einen Radialschnitt durch eine erste Ausführungsform eines zentripetal durchströmten Laufrades der erfindungsgemäßen Strömungsmaschine,

Figur 2 eine Vorderansicht auf das Laufrad von Figur 1,

Figur 3 einen Teilschnitt durch das Laufrad von Figur 1 gemäß der Linie III-III,

Figur 4 einen Radialschnitt durch eine zweite Ausführungsform eines Laufrades einer erfindungsgemäßen Strömungsmaschine,

Figur 5 eine Vorderansicht des Laufrades von Figur 4,

Figur 6 einen Teilschnitt durch das Laufrad von Figur 4 gemäß der Linie VI-VI,

Figur 7     einen Teilradialschnitt durch ein zwei Gruppen von Strömungskanälen enthaltendes Laufrad,

Figur 8     einen Teilradialschnitt durch ein drei Gruppen von Strömungskanälen enthaltenden Laufrad,

Figur 9     einen Teilradialschnitt durch eine zweistufige Einwellengasturbine mit eingebautem Verdichter, und

Figur 10     eine zweistufige Gasturbine mit zwei Laufrädern.

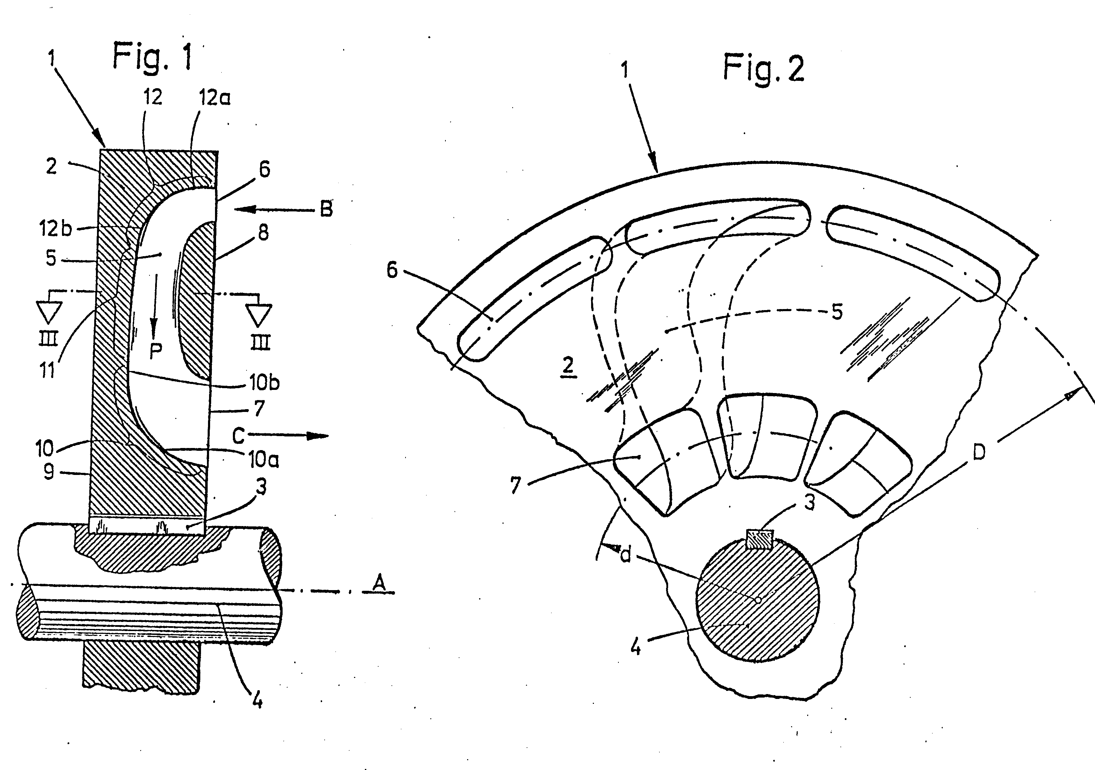

In den Figuren 1 bis 3 ist eine erfindungsgemäße Strömungsmaschine 1 mit einer ersten Ausführungsform eines Laufrades 2 gezeigt. Das Laufrad ist scheibenförmig gestaltet und z.B. mit Hilfe eines Nutkeiles 3 auf einer Welle 4 drehfest gelagert.

Das Laufrad besitzt in nicht gezeigter Weise neun Strömungskanäle 5, die für den Durchfluß eines Strömungsmittels dienen. Sie besitzen Eintrittsöffnungen 6 und Austrittsöffnungen 7. Der Figur 2 ist zu entnehmen, daß die Eintrittsöffnungen 6 von Schlitzen gebildet werden, deren Ecken abgerundet sein können. Die Schlitze liegen alle auf einem zur Achse der Welle 4 konzentrischen Ring, dessen mittlerer Durchmesser in Figur 2 mit D bezeichnet ist.

Die Austrittsöffnungen 7 dagegen sind gemäß der in Figur 2 gezeigten Gestaltung in radialer Richtung höher als die Eintrittsöffnungen. In Umfangsrichtung sind sie schmäler. Daraus ergibt sich eine in etwa rechteckige, bzw. trapezförmige Gestalt bei den Austrittsöffnungen.

Auch die Austrittsöffnungen liegen alle auf einem zur Achse der Welle 4 konzentrischen Ring, dessen mittlerer Durchmesser in Figur 2 mit d bezeichnet ist.

Im gezeigten Fall ist d nur etwa ein Drittel so groß wie D. Dies bedeutet, daß die Austrittsöffnungen sich sehr viel näher an der Welle befinden, als die Eintrittsöffnungen. Insbesondere aus Figur 1 kann entnommen werden, daß sich die Eintrittsöffnungen 6 an der gleichen Stirnseite 8 des scheibenförmigen Laufrades 2 befinden, während an der gegenüberliegenden Stirnseite 9 im gezeigten Fall weder Eintritts- noch Austrittsöffnungen angeordnet sind.

Um die Verbindung herzustellen zwischen der Eintrittsöffnung 6 und der entsprechenden Austrittsöffnung 7 ist im Inneren des Laufrades 2 der bereits angesprochene Strömungskanal 5 vorhanden. Dieser setzt sich aus einem zur Drehachse näher liegenden Knie 10, einem Verbindungsabschnitt 11 und einem zur Drehachse fernerem Knie 12 zusammen. Das Knie 10 schließt mit einem Schenkel 10a direkt an die Austrittsöffnung 7 an. Der Verbindungsabschnitt 11 stellt einen in etwa radial durchströmten Verbindungskanal zwischen einem Schenkel 10b des Knies 10 und einem Schenkel 12b des Knies 12 dar. Das Knie 12 steht mit einem Schenkel 12a direkt in Verbindung mit der Eintrittsöffnung 6. Die beiden Schenkel eines Knies schließen miteinander etwa einen Winkel von 90 Grad ein. Die Strömungskanäle können über die gesamte Länge entweder die von den Eintritts- bzw. Austrittsöffnungen geprägte rechteckige Querschnittsform beibehalten oder anschließend an diese Öffnungen nach einem entsprechenden Übergang rund oder oval gestaltet sein.

In Figur 1 der Zeichnung ist mit Hilfe des Pfeiles P gezeigt, daß das Laufrad in zentripetaler Richtung durchströmt wird. Die Erfindung ist jedoch nicht auf Laufräder beschränkt, die eine zentripetale Strömung in ihren Strömungskanälen aufweist. Es ist auch eine zentrifugale Durchströmung des Laufrades möglich.

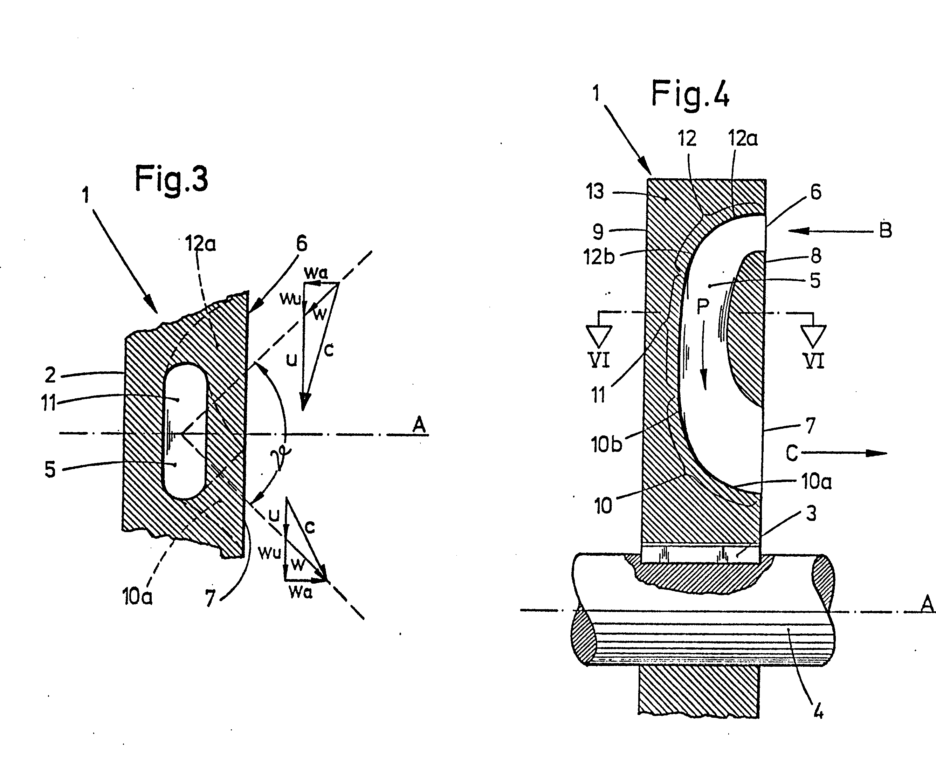

In Figur 3 der Zeichnung ist ein Teilschnitt durch das Laufrad von Figur 1 gemäß der Linie III-III gezeigt. In der Mitte des Laufrades ist deutlich der im vorliegenden Fall vorwiegend radial verlaufende Verbindungsabschnitt 11 zu sehen, der an dieser Stelle einen ovalen Querschnitt aufweist.

Der weitere Verlauf des Strömungskanlas ist strichpunktiert angedeutet. Es ist zu erkennen, daß im Bereich der Eintrittsöffnung 6 die Strömung mit der Relativgeschwindigkeit w einströmt. An der Eintrittsseite ist ein entsprechendes Geschwindigkeitsträg angelegt. Die Relativgeschwindigkeit w ist so gering, daß die Strömung bei ihrem Eintritt in das Laufrad ohne wesentliche Verluste von diesem aufgenommen und dem Strömungskanal zugeführt wird. Im Geschwindigkeitsdreieck ist noch die Umfangsgeschwindigkeit u und die Absolutgeschwindigkeit c angegeben, sowie die Tangentialkomponente $w_u$ und die Axialkomponente $w_a$ der Relativgeschwindigkeit w.

An der Austrittsseite bei der Öffnung 7 ist zu erkennen, daß die Strömung eine axiale Umlenkung um den Winkel $\vartheta$ erfahren hat. Dieser Winkel liegt im gezeigten Fall ungefähr bei 90 Grad.

Auch an der Austrittsseite ist ein Geschwindigkeitsdreieck mit der Relativgeschwindigkeit w, der Umfangsgeschwindigkeit u und der Absolutgeschwindigkeit c angegeben. Auch die Tangentialkomponente $w_u$ und die Axialkomoponente $w_a$ der Relativgeschwindigkeit w sind angedeutet.

Es ist zu erkennen, daß die Tangentialkomponenten $w_u$ an der Eintritts- und an der Austrittsseite in die gleiche Richtung zeigen, während die Axialkomponenten $w_a$ der Relativgeschwindigkeit an der Eintrittsseite entgegengerichtet ist zu der Axialkomponente $w_a$ an der Austrittsseite.

Aus dem Vorstehenden geht hervor, daß bei dem in den Figuren 1 bis 3 gezeigten Laufrad nicht nur eine axiale Umlenkung um den Winkel $\vartheta$ stattfindet, sondern auch eine Umlenkung in radialer Richtung um ungefähr 180 Grad. Dies ist besonders deutlich aus Figur 1 zu erkennen, wo durch den Pfeil B die Eintrittsströmung angedeutet ist und an der Austrittseite der Pfeil C die bereits um 180 Grad in radialer Richtung umgelenkte Abströmung angedeutet. Der Pfeil C verläuft in entgegengesetzter Richtung zu Pfeil B. Durch diese Ausgestaltung ergibt sich innerhalb des Laufrades ein sehr hohes Stufengefälle.

In den Figuren 4, 5 und 6 ist eine zweite Ausführungsform 13 eines Laufrades für eine erfindungsgemäße
Strömungsmaschine 1 gezeigt. Da sich die zweite Ausführungsform nur in einigen Bereichen von der ersten
Ausführungsform unterscheidet, wird lediglich auf die
Unterschiede eingegangen und im übrigen auf die Beschreibung des ersten Ausführungsbeispieles verwiesen. Gleiche Teile haben gleiche Bezugsziffern.

Bei der zweiten Ausführungsform ist ebenfalls eine
zentripetale Durchströmung der Strömungskanäle gegeben. Die jeweiligen Eintrittsöffnungen 6 befinden
sich ebenfalls wie bei der Ausführungsform gemäß
den Figuren 1 bis 3 in einem radial größerem Abstand
D von der Drehachse A, als dies bei den Austrittsöffnungen 7 mit dem Abstand d der Fall ist. Aber auch
hier münden die Strömungskanäle mit ihren Eintritts-
bzw. Austrittsöffnungen jeweils an der einen Stirnseite 8 des Laufrades.

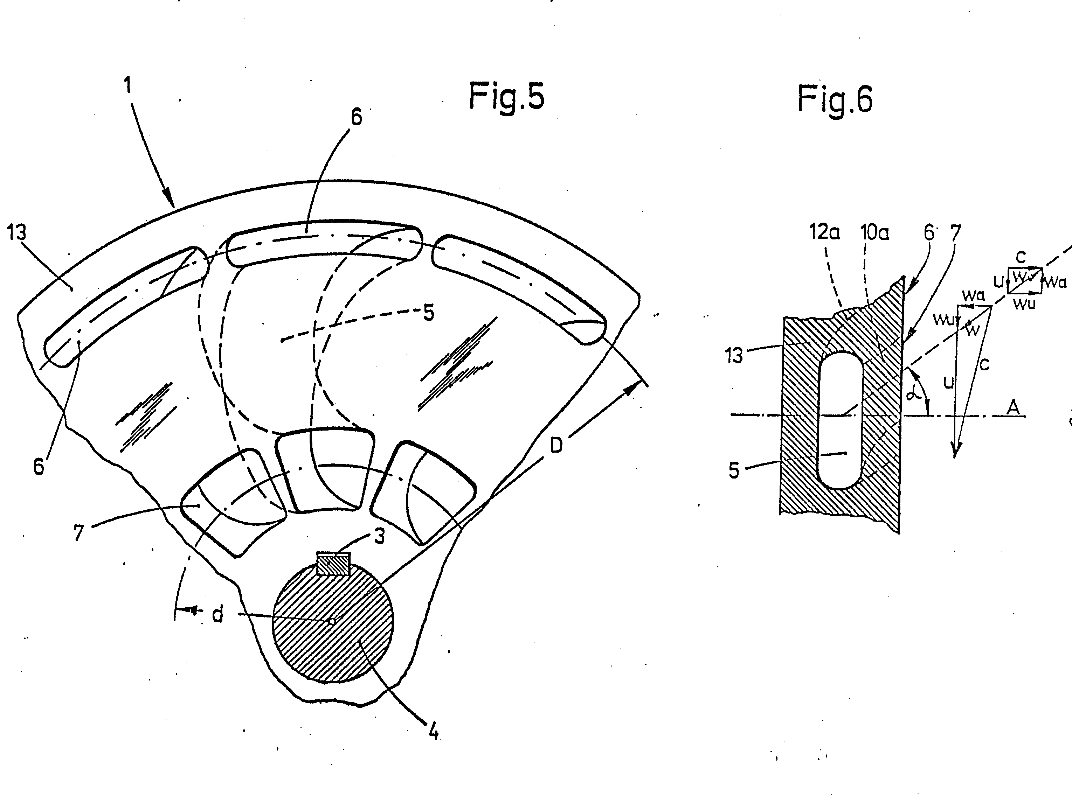

Unterschiedlich zur ersten Ausführungsform ist die
Tatsache, daß nunmehr die Eintritts- und die Austrittsöffnungen der jeweils vorhandenen Strömungskanäle so gerichtet sind, daß die Ein- und die Ausströmung in der gleichen Richtung erfolgt. In Figur 6
ist gezeigt, daß das radial fernere Umlenkknie 12 und
das radial nähere Umlenkknie 10 jeweils so mit ihren
zu den entsprechenden Öffnungen hingerichteten Schenkeln 10a und 12a so gerichtet sind, daß diese Schenkel in eine gemeinsame Richtung zeigen, die in Figur 6 durch den Winkel $\alpha$ angedeutet ist. Sowohl für die Ein- als auch für die Ausströmung ist jeweils ein Geschwindigkeitsdreieck eingetragen. Das näher zu dem Laufrad gezeichnete Geschwindigkeitsdreieck bezieht sich auf die Einströmung. Es ist deutlich die Relativgeschwindigkeit w, die Umfangsgeschwindigkeit u und die Absolutgeschwindigkeit c zu sehen. Die Relativgeschwindigkeit ist auch in ihre Axialkomponente $w_a$ und in ihre Umfangs- bzw. Tangentialkomponente $w_u$ zerlegt.

Die gleichen Bezeichnungen sind auch bei dem für die Ausströmung gültigen Geschwindigkeitsdreieck angegeben. Es ist zu erkennen, daß die Relativgeschwindigkeit an der Austrittsseite zwar genauso wie die Relativgeschwindigkeit an der Eintrittsseite in der durch den Winkel $\alpha$ vorgegebenen Linie verläuft, daß diese Relativgeschwindigkeiten aber auch hier einander entgegengerichtet sind. Es gilt deshalb festzuhalten, daß im vorliegenden Fall an der Eintritts- und an der Austrittsseite sowohl die Tangentialkomponenten $w_u$ als auch die Axialkomponenten $w_a$ der Relativgeschwindigkeit einander entgegengerichtet sind. Auch diese Ausführungsform des Laufrades 13 gibt die Gewähr für ein hohes Stufengefälle. Natürlich sind auch Zwischenformen zwischen den in Fig. 1, 2, 3, und 4, 5, 6 gezeigten Ausführungen möglich.

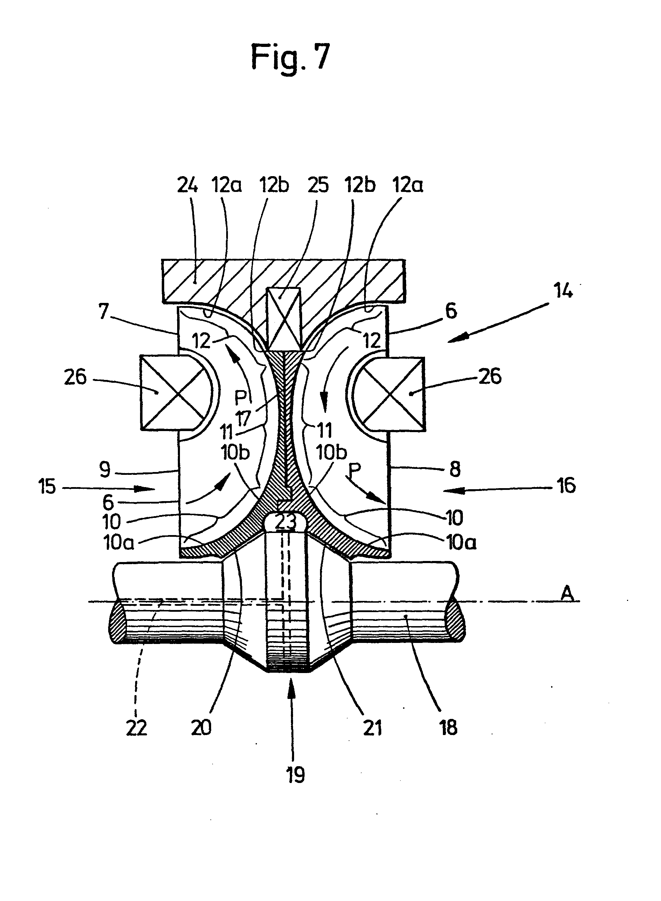

In Figur 7 ist ein Laufrad 14 gezeigt, das in sich zwei Gruppen 15 und 16 von Strömungskanälen enthält. Der prinzipielle Aufbau dieses Laufrades ähnelt demjenigen der bereits in den Figuren 1 bis 6 dargestellen Laufräder 2 und 13. Es sind deshalb für die gleichen Teile wiederum die gleichen Bezugsziffern verwendet. Der Unterschied zu den vorhergehenden Ausführungsformen besteht jedoch darin, daß die zwei Gruppen 15 und 16 der Strömungskanäle gleich-

14

sam Rücken an Rücken in einem gemeinsamen Laufradkörper angeordnet sind.

Das gezeigte Laufrad ist für einen Turbolader vorgesehen, wo bekanntlich Abgase dazu verwendet werden,
um die für die Verbrennungskraftmaschine gewünschte
Verdichtung des Arbeitsmittels zu erreichen.

Zu diesem Zweck wird die Gruppe 15 der Strömungskanäle in zentrifugaler Richtung durchströmt, während
in den Strömungskanälen der Gruppe 16 eine zentripetale Strömung gegeben ist. Durch die Gruppe 16
werden nämlich die sich entspannenden Abgase geleitet,
während mit Hilfe der Gruppe 15 die Verdichtung des
Arbeitsmittels erfolgen soll.

Aus Figur 7 ist zu erkennen, daß bei der Gruppe 15 die
Eintrittsöffnungen 6 in einem radial geringeren Abstand zu der Drehachse A angeordnet sind, als die
Austrittsöffnungen 7. Auch im vorliegenden Fall wurden
wieder für gleich Bestandteile die gleichen Bezugsziffern verwendet. Es ist deshalb der Fall gegeben,
daß nunmehr der Schenkel 10a bei der Gruppe 15 zur
Eintrittsöffnung 6 hinweist, während der Schenkel 12a
des Umlenkknies 12 zur Austrittsöffnung 7 hinleitet.

Die zentrifugale Strömung ist durch den Pfeil P angegeben. Dies gilt auch für die Gruppe 16.

Im vorliegenden Fall weist das Laufrad eine radial
verlaufende Teilungsfuge 17 auf und setzt sich infolgedessen aus zwei Teilen zusammen, die Rücken an
Rücken zu einem gemeinsamen Gebilde zusammenmontiert
werden. Dabei enthält der eine Teil des Laufrades
die Gruppe 15 mit ihren an der einen Stirnseite 9
angeordneten Eintritts- und Austrittsöffnungen 6, 7,
während der andere Teil des Laufrades die Gruppe 16
enthält mit ihren Eintritts- und Austrittsöffnungen
6, 7 an der anderen Stirnseite 8.

15

Das Laufrad ist auf einer feststehenden Welle 18 gelagert, die an der vorgesehenen Lagerstelle eine Verdickung 19 nach der Art eines Doppelkegels besitzt. Das Laufrad weist entsprechende kegelige Laufflächen 20 und 21 auf, mit denen es auf der Verdickung der Welle läuft. Das Lager ist als Gasdrucklager ausgebildet. Durch eine strichpunktiert eingezeichnete Versorgungsleitung 22 wird Gas unter Druck in den hierfür vorgesehenen Verteilungsraum 23 eingepreßt.

Das Laufrad 14 ist ohne radiale Überdeckung an den Außenbereichen der Strömungskanäle gefertigt. Es ist hierfür ein Gehäuse 24 vorgesehen, das den Bewegungsraum des Laufrades 14 radial nach außen hin ummantelt. Zur Abdichtung zwischen den Strömungskanälen der Gruppe 15 und denjenigen der Gruppe 16 ist eine Dichtung 25 vorgesehen, die in radialer Richtung in das Laufrad 14 hineinragt. Ebenso sind zwischen den Eintrittsöffnungen 6 und den Austrittsöffnungen 7 der beiden Gruppen 15 und 16 Dichtungen 26 vorhanden. Durch das Weglassen der radialen Überdeckung beim Laufrad 14 wird bei dem gezeigten Turbolader ein vorteilhaft kleines Massenträgheitsmoment erreicht.

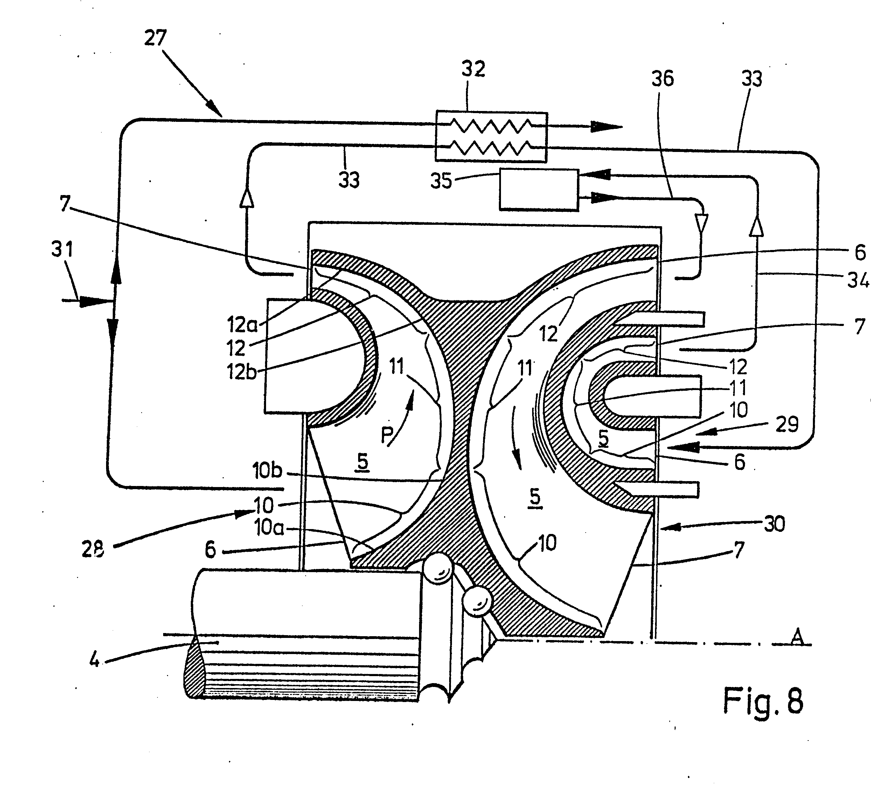

In Figur 8 ist ein Laufrad 27 einer Gasturbine gezeigt. Auch hier gilt, daß bei gleichen Teilen gleiche Bezugsziffern verwendet werden. Das Laufrad 27 ist durch Kugellager auf der Welle 4 drehbar gelagert und besitzt insgesamt drei Gruppen von Strömungskanälen, nämlich die Verdichtergruppe 28, die Verdichtergruppe 29 und die Entspannungsgruppe 30.

Die Strömungskanäle der Gruppe 28 münden jeweils mit ihren Eintritts- und Austrittsöffnungen an der dargestellten linken Stirnseite des Laufrades, während die jeweiligen Eintritts- und Austrittsöffnungen der beiden Gruppen 29 und 30 sich auf der rechten Stirnseite des Laufrades befinden.

Der Strömungsverlauf innerhalb des Laufrades 27 sei kurz erläutert. Über den Kanal 31 wird Luft sowohl einem Zwischenkühler 32 als auch der Gruppe 28 für die Brennkammer zugeleitet. Innerhalb der Gruppe 28 wird bei einer zentrifugalen Strömung in den Strömungskanälen 5 eine Verdichtung der Luft erreicht. Anschließend wird die verdichtete Luft nach Verlassen der Austrittsöffnungen 7 über den Kanal 33 dem Zwischenkühler und danach den Eintrittsöffnungen 6 der Strömungskanäle der Gruppe 29 zugeleitet. In diesen Strömungskanälen ist aufgrund der radial weiter außen liegenden Austrittsöffnungen eine zentrifugale Durchströmung gegeben. Die Luft wird weiter verdichtet. Sie verläßt die Austrittsöffnungen dieser Gruppe und wird über einen Kanal 34 der Brennkammer 35 zugeführt. Anschließend wird das verwendete Strömungsmittel über den Kanal 36 den radial außen liegenden Eintrittsöffnungen 6 der Strömungskanäle der Gruppe 30 zugeleitet, worauf das Strömungsmittel sich nach Durchströmen der Strömungskanäle in zentripetaler Richtung entspannen kann und diese Strömungskanäle über die radial nahe an der Achse A liegenden Austrittsöffnungen 7 verlassen kann.

Es ist hervorzuheben, daß die Strömungskanäle der Gruppe 29 innerhalb des Laufrades innerhalb des Raumes untergebracht sind, der durch die kurvenartige Beugung der Strömungskanäle der Gruppe 30 frei bleibt.

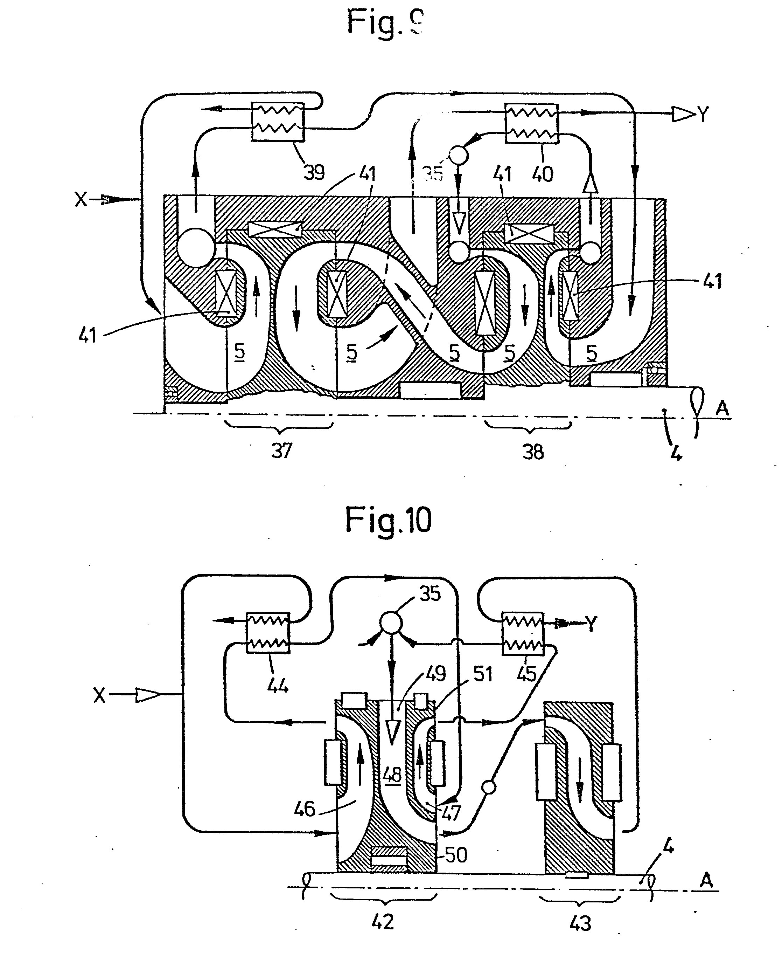

Figur 9 zeigt eine zweistufige Strömungsmaschine mit zwei auf der Welle 4 festsitzenden Laufrädern 38 und 38.

Die Durchströmung der Maschine ist durch Strömungspfeile angedeutet. Es ist deutlich zu erkennen, daß die beiden Laufräder 37 und 38 in etwa dem Laufrad 14 von Figur 7 ähneln. Jedoch ist bei den Laufrädern 37 und 38 jeweils eine radial Überdeckung im Laufrad vorhanden.

Das Strömungsmittel ist beim Durchlaufen dieser Strömungsmaschine zweimal durch Zwischenkühler 39, 40 und einmal durch eine Bremskammer 35 geführt.

In der Zeichnung sind auch deutlich die sowohl in radialer als auch in axialer Richtung in die Laufräder hineinragenden Dichtelemente 41 zu erkennen.

In Figur 10 ist wiederum schematisch eine zweistufige Gastrubine mit zwei Laufrädern 42 und 43 gezeigt, von denen das letztere Laufrad 43 drehfest auf der Welle 4 gelagert ist, während sich das Laufrad 42 auf der Welle 4 frei drehen läßt.

Auch in Figur 10 ist die Durchströmung der Strömungsmaschine durch Strömungspfeile deutlich sichtbar gemacht. Die Zufuhr des Strömungsmittels beginnt beim Pfeil X, Die Abfuhr ist durch den Pfeil Y gekennzeichnet. Der vorhandene Zwischenkühler ist mit dem

18

Bezugzeichen 44, die Brennkammer mit dem Bezugszeichen 35 und ein Abgaswärmetauscher ist mit dem Bezugszeichen 45 versehen. Es ist deutlich zu erkennen, daß das Laufrad 42 zwei Verdichterstufen, nämlich einmal die Gruppe 46 der Strömungskanäle und einmal die Gruppe 47 der Strömungskanäle enthält. Desgleichen umfaßt dieses Laufrad noch einen Entspannerstufe 48 mit radialer Einströmung. Dies bedeutet, daß bei den Strömungskanälen der Gruppe 48 die Eintrittsöffnungen 49 sich an der Mantelfläche des Laufrades 42 befinden. Nach einer Umlenkung um ungefähr 90 Grad erfolgt jedoch bei den Austrittsöffnungen 50 eine Abströmung zur Stirnseite 51 des Laufrades hin. Die Gruppe 48 der Strömungskanäle stellt eine Entspannerstufe dar.

Das Laufrad 43 bildet mit seinen zentripetal durchströmten Strömungskanälen ebenfalls nochmals eine Entspannerstufe.

PATENTANWÄLTE     A. GRÜNECKER
DIPL.-ING

H. KINKELDEY
DR.-ING

W. STOCKMAIR
DR.-ING · AeE (CALTECH)

K. SCHUMANN
DR RER NAT · DIPL.-PHYS

P. H. JAKOB
DIPL.-ING

G. BEZOLD
DR RER NAT · DIPL.-CHEM

8 MÜNCHEN 22
MAXIMILIANSTRASSE 43

Bachl Herbert Professor Dr.          PA 13427
Stolzingstraße 4                     EP 52
8000 München  81

Patentansprüche

1. Strömungsmaschine mit wenigstens einem, im wesentlichen scheibenförmigen Laufrad, das Strömungskanäle für ein Strömungsmittel aufweist, deren Eintritts- und Austrittsöffnungen stirnseitig am Laufrad angeordnet sind, wobei alle Eintrittsöffnungen einen vorbestimmten Abstand zur Drehachse aufweisen, der verschieden ist, vom entsprechenden Abstand der Austrittsöffnungen von der Drehachse und jeder Strömungskanal jeweils ein radial ferneres und ein radial näheres Umlenkknie mit je zwei Schenkeln aufweist, die jeweils miteinander etwa einen 90 Grad Winkel bilden, wobei ein Schenkel des einen Knies zu der Eintrittsöffnung hinführt und in Richtung der Relativ-geschwindigkeit der dort vorhandenen Eintritts-strömung des Strömungsmittels verläuft und ein Schenkel des anderen Knies zu der Austrittsöffnung hinleitet und in Richtung der Relativgeschwindigkeit der Austrittströmung verläuft, während der jeweilige andere Schenkel zu einem gemeinsamen, in etwa radialen Verbindungsabschnitt hingerichtet ist, der die beiden Umlenkknie miteinander verbindet, d a d u r c h   g e - k e n n z e i c h n e t , daß sowohl die Ein-trittsöffungen   (6) als auch die Austrittsöffnungen (7) sich auf der gleichen Stirnseite des Laufrades (2, 13, 14, 28, 37, 38, 42, 43) befinden.

2. Strömungsmaschine nach Anspruch 1, d a d u r c h g e k e n n z e i c h n e t , daß das Laufrad (24, 27, 37, 38, 42, 43)   wenigstens eine Gruppe (15, 28, 46) von jeweils auf der einen Stirnseite (9) mit Eintritts- und Austrittsöffnungen (6,7) mündenden Strömungskanälen (5) und wenigstens eine zweite Gruppe (16, 29, 30, 47) von jeweils auf der anderen Stirnseite (8) jeweils mit Eintritts- und Austrittsöffnungen (6,7) mündenden Strömungskanälen (5) aufweist.

3. Strömungsmaschine nach Anspruch 1 oder 2, d a d u r c h   g e k e n n z e i c h n e t , daß eine Gruppe (48) von Strömungskanälen (5) vorhanden ist, deren Eintritts- bzw. Austrittsöffnungen (49) sich an der Mantelfläche des Laufrades (43) befinden, während deren Eintritts-bzw. Austrittsöffnungen (50) an einer der beiden Stirnseiten (51) angeordnet sind.

3

4. Strömungsmaschine nach wenigstens einem der Ansprüche 1 bis 3, d a d u r c h   g e k e n n - z e i c h n e t , daß das am Laufrad (2, 13, 24, 28, 37, 38, 42, 43) in Bereichen zwischen mit unterschiedlichem Druck durchströmten Öffnungen (6,7) Dichtungselemente (26, 41) angeordnet sind, die in axialer                Richtung in das Laufrad hineinragen.

5. Strömungsmaschine nach wenigstens einem der Ansprüche 1 bis 4, d a d u r c h   g e - k e n n z e i c h n e t , daß die Strömungs- kanäle (5) zumindest im Außenbereich des Lauf- rades ohne radiale Überdeckung ausgeführt sind (Figur 7).

# Fig. 1

# Fig. 2

00005431
FA 13
EP 52

Fig.3

Fig.4

# Fig.5

# Fig.6

0005431 EP 52

4/6

## Fig. 7

Fig. 8

# Fig. 9

# Fig.10